# EUROPÄISCHE PATENTANMELDUNG

(11) **EP 4 049 520 A1**
(43) Veröffentlichungstag der Anmeldung: **31.08.2022**
(21) Anmeldenummer: 22152678.3
(22) Anmeldetag: 21.01.2022
(51) Int. Cl.: A01B 63/11, A01B 73/02, A01B 63/00

(54) **GEZOGENE LANDWIRTSCHAFTLICHE ARBEITSMASCHINE UND VERFAHREN ZUR GEWICHTSVERLAGERUNG EINER LANDWIRTSCHAFTLICHEN ARBEITSMASCHINE**

(30) Priorität: 24.02.2021 DE 102021104383
(71) Anmelder: Horsch Maschinen GmbH, 92421 Schwandorf (DE)
(72) Erfinder: Horsch, Philipp, 92421 Schwandorf (DE)
(74) Vertreter: v. Bezold & Partner Patentanwälte - PartG mbB

(57) **Zusammenfassung**

Die Erfindung betrifft eine gezogene landwirtschaftliche Arbeitsmaschine (10), insbesondere Bodenbearbeitungs- und/oder Saatmaschine, mit einem eine Zugvorrichtung (12) aufweisenden Maschinenrahmen (14), wobei die Zugvorrichtung (12) dazu eingerichtet ist, dass die Arbeitsmaschine (10) mit einer landwirtschaftlichen Zugmaschine verbindbar und eine Abstützkraft (FA) auf die Zugmaschine übertragbar ist, wobei dem Maschinenrahmen (14) mehrere sich auf dem Boden abstützende Laufräder (18) zugeordnet und wobei am Maschinenrahmen (14), gegenüber diesem höhenverstellbar gelagerte Bodenbearbeitungs- und/oder Saatwerkzeuge (20) angeordnet sind. Um eine gezogene landwirtschaftliche Arbeitsmaschine (10) mit einer optimierten Gewichtsverteilung sowohl bei einer Feldarbeit als auch bei einem Straßentransport zu schaffen ist vorgesehen, dass eine Relativposition (24; 26) von zumindest einem Laufrad (18) gegenüber dem Maschinenrahmen (14) in Bezug auf die Fahrtrichtung (FR) veränderbar ist.

Die Erfindung betrifft zudem ein Verfahren zur Gewichtsverlagerung an einer gezogenen landwirtschaftlichen Arbeitsmaschine (10).

## Beschreibung

Die Erfindung betrifft eine gezogene landwirtschaftliche Arbeitsmaschine, insbesondere eine Bodenbearbeitungs- und/oder Saatmaschine. Die Erfindung betrifft zudem ein Verfahren zur Gewichtsverlagerung an einer gezogenen landwirtschaftlichen Arbeitsmaschine.

In der Landwirtschaft werden zur Bodenbearbeitung und/oder zur Aussaat von landwirtschaftlichen Verteilgütern landwirtschaftliche Arbeitsmaschinen eingesetzt, wobei diese häufig als mittels einer Zugmaschine gezogene Arbeitsmaschinen ausgeführt sind. Bei der Entwicklung und beim Bau derartiger Arbeitsmaschinen müssen zum einen ackerbauliche Aspekte bei einer Feldarbeit und zum anderen rechtliche Aspekte beim Straßentransport berücksichtigt werden. So ist in der Regel für die Feldarbeit auf einer Ackerfläche, zur Bodenschonung und zur gleichmäßigen Bearbeitung, eine möglichst gleichmäßige Gewichtsverteilung auf alle Bodenbearbeitungs- und/oder Saatwerkzeuge oder eine möglichst große Gewichtsentlastung der Bodenbearbeitungs- und/oder Saatwerkzeuge wünschenswert. Für einen Straßentransport hingegen muss die Gewichtsverteilung so ausgelegt sein, dass Stützlasten und Achslasten gesetzlich vorgeschriebene maximal Werte nicht überschreiten. Wobei sich diese Probleme mit zunehmenden Arbeitsbreiten der Arbeitsmaschinen entsprechend vergrößern.

Bislang wurden gezogene landwirtschaftliche Arbeitsmaschinen derartig konstruiert, dass mit diesen die gesetzlichen Vorgaben eingehalten werden konnten. Dies ging jedoch in der Regel mit einer Verschlechterung der optimalen Gewichtsverteilung bei einer Feldarbeit einher. Wobei dies insbesondere bei Arbeitsmaschinen der Fall ist, bei denen zumindest einige Bodenbearbeitungs-und/oder Saatwerkzeuge in Bezug auf die Fahrtrichtung hinter den Laufrädern, respektive der Achse, der Arbeitsmaschine angeordnet sind, weil dadurch zwar die Gewichtsverteilung für eine Feldarbeit optimiert werden kann, jedoch für einen Straßentransport eine sog. negative Stützlast, welche für einen Straßentransport nicht zulässig ist, auftreten kann.

Aufgabe der Erfindung ist es somit, eine gezogene landwirtschaftliche Arbeitsmaschine mit einer optimierten Gewichtsverteilung sowohl bei einer Feldarbeit als auch bei einem Straßentransport zu schaffen.

Diese Aufgabe wird gelöst durch eine gezogene landwirtschaftliche Arbeitsmaschine mit den Merkmalen des unabhängigen Anspruch 1, sowie mit den Merkmalen des Verfahrensanspruch 16. Vorteilhafte Ausführungsformen und Weiterbildungen der Erfindung sind in den Ansprüchen und der folgenden Beschreibung unter teilweiser Bezugnahme auf die Figuren offenbar.

Die Erfindung betrifft eine gezogene landwirtschaftliche Arbeitsmaschine, insbesondere Bodenbearbeitungs- und/oder Saatmaschine. Das heißt die Arbeitsmaschine ist zweckmäßig insbesondere eingerichtet um mittels einer landwirtschaftlichen Zugmaschine (z.B. Traktor) gezogen zu werden.

Die Arbeitsmaschine umfasst einen, eine Zugvorrichtung aufweisenden Maschinenrahmen, wobei die Zugvorrichtung (z.B. Zugöse, Zugpendel, Zweipunkt- oder Dreipunktverbindung, und/oder dergl.) eingerichtet ist, dass die Arbeitsmaschine mit einer landwirtschaftlichen Zugmaschine (z.B. vorzugsweise Traktor) verbindbar und eine Abstützkraft (z.B. positive oder negative Stützlast) auf die landwirtschaftliche Zugmaschine (z.B. Anhängung der Traktors) übertragbar ist.

Dem Maschinenrahmen sind, vorzugsweise im hinteren Bereich, mehrere sich auf den Boden abstützende Laufräder zugeordnet.

Die Arbeitsmaschine ist erfindungsgemäß bspw. derartig ausgeführt, dass in einer Straßenfahrt und/oder einer Feldarbeit eine Gewichtsverteilung derartig erfolgt, dass ein Teil des Gewichts über die mehreren Laufräder auf den Boden übertragen wird und ein Teil des Gewichts über die Zugvorrichtung auf die landwirtschaftliche Zugmaschine übertragen wird.

Zur Bodenbearbeitung und/oder zur Aussaat ist zudem vorgesehen, dass am Maschinenrahmen, vorzugsweise in Bezug auf die Fahrtrichtung hinter zumindest einem der mehreren Laufräder, gegenüber diesem höhenverstellbar gelagerte Bodenbearbeitungs- und/oder Saatwerkzeuge angeordnet sind.

Um eine gezogene landwirtschaftliche Arbeitsmaschine mit einer optimierten Gewichtsverteilung sowohl bei einer Feldarbeit als auch bei einem Straßentransport zu schaffen ist erfindungsgemäß vorgesehen, dass eine Relativposition von zumindest einem Laufrad gegenüber dem Maschinenrahmen (z.B. gegenüber den Bodenbearbeitungs- und/oder Saatwerkzeugen) in Bezug auf die Fahrtrichtung veränderbar ist.

Infolge der erfindungsgemäßen Veränderbarkeit der Relativposition von zumindest einem Laufrad ist somit eine gezielte Gewichtsverlagerung der Arbeitsmaschine möglich. Insbesondere ist somit eine Anpassung der Stützlast und der auf die Laufräder wirkenden Achslasten, respektive Radlasten, möglich, zweckmäßig derartig, um zum einen die gesetzlichen Vorgaben für eine Straßenfahrt einhalten zu können und zum anderen, um eine für eine Feldarbeit gewünschte Gewichtsverteilung zu optimieren. Zudem ist es somit möglich, durch eine verbesserte Gewichtsverteilung die Fahreigenschaften der Arbeitsmaschine an sich und somit wiederum die Sicherheit beim Betreiben der Arbeitsmaschine zu verbessern.

Eine für eine Feldarbeit weitestgehende Entlastung der Bodenbearbeitungs- und/oder Saatwerkzeuge kann somit zweckmäßig erreicht werden, indem diese, vorzugsweise in Bezug auf die Fahrtrichtung, und bspw. ausschließlich hinter zumindest einem der mehreren Laufräder, angeordnet sind. Wodurch es möglich ist, dass die Gewichtsverteilung der Arbeitsmaschine, in einer Feldarbeit möglichst gleichmäßig und in geringer Weise auf einzelne Bodenbearbeitungs- und/oder Saatwerkzeuge erfolgt.

Es sei darauf hingewiesen, dass die Fahrtrichtung insbesondere einer Vortriebsrichtung der Arbeitsmaschine entspricht, als einer Richtung entspricht entlang derer die Arbeitsmaschine mittels einer landwirtschaftlichen Zugmaschine bewegt wird, wobei dies sowohl vorwärts als auch zumindest kurzzeitig rückwärts sein kann.

Es sei darauf hingewiesen, dass die Positionsangaben gemäß folgender Beschreibung sich jeweils insbesondere auf die Laufräder beziehen, deren Relativposition veränderbar sind, in der Arbeitsmaschine in deren Relativposition nicht veränderbare Laufräder sind demnach zweckmäßig vorzugsweise von der Definition, respektive den Positionsangaben ausgenommen, das heißt, dass es somit auch möglich ist, dass zumindest ein Laufrad (oder mehrere Laufräder) deren Relativposition nicht verändern und/oder diese dauerhaft im Bereich der Bodenbearbeitungs- und/oder Saatwerkzeuge angeordnet bleiben.

Zur Einhaltung der jeweiligen Radlasten kann bspw. vorgesehen sein, dass die Arbeitsmaschine zumindest zwei Laufräder aufweist, welche eine Achse bilden können, wobei somit zweckmäßig eine Relativposition der Achse gegenüber dem Maschinenrahmen in Bezug auf die Fahrtrichtung veränderbar ist.

Wobei es alternativ oder ergänzend auch möglich und unter die Definition der Erfindung subsumierbar ist, dass die Arbeitsmaschine mehrere Achsen umfasst und zumindest von einer Achse eine Relativposition gegenüber dem Maschinenrahmen in Bezug auf die Fahrtrichtung veränderbar ist. Auch eine Kombination aus einer Achse mit zwei oder mehr Laufrädern und einem einzelnen Laufrad wäre denkbar, respektive unter die Definition der Erfindung subsumierbar, wobei bspw. von der Achse und/oder vom einzelnen Laufrad eine Relativposition gegenüber dem Maschinenrahmen in Bezug auf die Fahrtrichtung veränderbar ist.

Im Kontext der Erfindung umfasst die Definition Laufrad, zweckmäßig jegliche Fahrwerkstypen, als bspw. auch Raupenlaufwerke oder dergl. Auch entsprechende Aufhängungsvorrichtungen, Rahmenkonstruktionen oder dergl. zum Lagern des Laufrad sind mit umfasst.

Der Maschinenrahmen kann ein- oder mehrteilig ausgeführt sein und durch lösbare und/oder unlösbare Verbindungen zusammengesetzt sein.

Eine bevorzugte Ausführungsform kann vorsehen, dass ein Verändern der Relativposition derartig erfolgt, dass das zumindest eine Laufrad, gegenüber der Fahrtrichtung zumindest eine vordere Relativposition und eine hintere Relativpositionen einnehmen kann.

Zweckmäßig kann eine vordere Relativposition für eine Feldarbeit und eine hintere Relativposition für eine Straßenfahrt vorgesehen sein. Es sei hierzu angemerkt, dass das zumindest eine Laufrad nicht nur eine vordere Relativposition und eine hintere Relativposition einnehmen kann sondern auch Relativpositionen einnehmen kann, die zwischen der vorderen Relativposition und der hinteren Relativposition liegen.

Zur Erreichung einer möglichst großen Gewichtsverlagerung ist es möglich, dass ein Abstand der vorderen Relativposition zur hinteren Relativposition, vorzugsweise bezogen auf einen Aufstandspunkt des zumindest einen Laufrad, mindestens 0,2 Meter oder mindestens 0,5 Meter oder mindestens 0,7 Meter oder mindestens 1 Meter beträgt. Alternativ oder ergänzend ist es möglich, ein Abstand mindestens der Größe eines halben Durchmessers des zumindest einen Laufrad entspricht.

Gemäß einer bevorzugten Ausführungsvariante kann vorgesehen sein, dass Vertikal zur Fahrtrichtung die Höhenlage des zumindest einen Laufrad, vorzugsweise des zumindest einen Laufrad in der vorderen Relativposition und der hinteren Relativposition im Wesentlichen identisch ist und/oder ein Höhenversatz maximal 0,1 Meter oder maximal 0,25 Meter oder maximal 0,5 Meter beträgt. Somit wird durch eine Veränderung der Relativposition eine Transporthöhe nicht oder nur im geringen Maße beeinflusst.

Eine bevorzugte Ausführungsvariante der Erfindung kann vorsehen, dass ein Verändern der Relativposition derartig erfolgt, dass das zumindest eine Laufrad, gegenüber der Fahrtrichtung eine vordere Relativposition und eine hintere Relativposition einnehmen kann, wobei ein Verhältnis aus einem Abstand, in Bezug auf die Fahrtrichtung, der vorderen Relativposition zur hinteren Relativposition und einem Höhenversatz vertikal zur Fahrtrichtung zwischen der vorderen Relativposition und der hinteren Relativposition, vorzugsweise jeweils bezogen auf einen Aufstandspunkt des zumindest einen Laufrad, im wesentlichen maximal 1 : 0,2 (in Worten 1 zu 0,2) oder maximal 1: 0,3 oder maximal 1: 0,5 oder maximal 1 : 1 beträgt. Das bedeutet, dass bspw. eine Veränderung der Relativposition in Fahrtrichtung von 1 Meter einen Höhenversatz von im Wesentlichen maximal 0,2 Meter oder 0,3 Meter oder 0,5 Meter oder 1 Meter hervorruft.

Eine Relativposition des zumindest einen Laufrad kann auf verschiedenste Weise veränderbar sein, bspw. durch ein axiales Verschieben gegenüber dem Maschinenrahmen. Wobei hierfür bspw. eine Linearführung und/oder ein entsprechender Schieberahmen vorgesehen sein kann. Alternativ oder ergänzend kann ein Verändern, bspw. durch ein rotatorisches Verschwenken gegenüber dem Maschinenrahmen, vorzugsweise um eine quer zur Fahrtrichtung orientierte Schwenkachse, erfolgen. Wobei hierfür bspw., dass zumindest eine Laufrad und/oder die Achse mittels einer Schwinge am Maschinenrahmen gelagert sein kann. Alternativ oder ergänzend kann ein Verändern, bspw. durch ein translatorisches Bewegen des Laufrades gegenüber dem Maschinenrahmen, erfolgen, wobei hierfür das zumindest eine Laufrad und/oder die Achse bspw. entlang einer Kurvenbahn gegenüber dem Maschinenrahmen bewegbar sein kann.

Auch denkbar wären für ein Verändern der Relativposition entsprechende kombinierte Bewegungen, welche sich bspw. aus linearen, rotatorischen und/oder translatorischen Bewegungen zusammensetzen.

Eine bevorzugte Ausführungsvariante der Erfindung kann vorsehen, dass ein Verändern der Relativposition des zumindest einen Laufrad in Anhängigkeit einer Hublage der Bodenbearbeitungs-und/oder Saatwerkzeuge erfolgt, vorzugsweise in Abhängigkeit einer abgesenkten und/oder ausgehobenen Hublage der Bodenbearbeitungs- und/oder Saatwerkzeuge erfolgt. Somit können insbesondere Kollisionen zwischen dem Laufrad und den Bodenbearbeitungs- und/oder Saatwerkzeugen verhindert werden, da ein Verändern der Relativposition, bspw. der vorderen Relativposition zur hinteren Relativposition nur erfolgen kann, wenn die Bodenbearbeitungs-und/oder Saatwerkzeuge eine definierte Hublage aufweisen.

Ergänzend oder optional hierzu ist es auch möglich, dass ein Verändern der Relativposition derartig erfolgt, dass das zumindest eine Laufrad, gegenüber der Fahrtrichtung zumindest eine vordere Relativposition und eine hintere Relativposition einnehmen kann, wobei eine vordere Relativposition bei abgesenkten Bodenbearbeitungs- und/oder Saatwerkzeugen eingenommen werden kann (z.B. wenn die Bodenbearbeitungs- und/oder Saatwerkzeuge einen Bodenkontakt aufweisen) und/oder eine hintere Relativposition ausschließlich bei ausgehobenen Bodenbearbeitungs- und/oder Saatwerkzeugen eingenommen werden kann (z.B. wenn die Bodenbearbeitungs- und/oder Saatwerkzeuge keinen Bodenkontakt aufweisen und/oder eine Position für einen Straßentransport aufweisen).

Um eine Gewichtsverteilung in einer Feldarbeit und einem Straßentransport noch weiter zu optimieren, ist es in einer Weiterbildung der Erfindung möglich, dass ein Verändern der Relativposition derartig erfolgt, dass das zumindest eine Laufrad, vorzugsweise die mehreren Laufräder, gegenüber der Fahrtrichtung zumindest eine vordere Relativposition und eine hintere Relativposition einnehmen können, wobei in einer vorderen Relativposition, sich alle Laufräder mit deren komplettem Umfang in Bezug auf die Fahrtrichtung vor den Bodenbearbeitungs- und/oder Saatwerkzeugen befinden und/oder in einer hinteren Relativposition, sich zumindest ein Laufrad in Bezug auf die Fahrtrichtung zumindest abschnittweise auf gleicher Höhe und/oder unterhalb der Bodenbearbeitungs- und/oder Saatwerkzeuge befindet.

Um die maximal zulässigen Transportmaße der Arbeitsmaschine für einen Straßentransport einhalten zu können ist es zweckmäßig möglich, dass ein Verändern der Relativposition derartig erfolgt, dass das zumindest eine Laufrad, gegenüber der Fahrtrichtung zumindest eine vordere Relativposition und eine hintere Relativposition einnehmen kann, wobei in einer hinteren Relativposition eine Anordnung des Laufrad zu den Bodenbearbeitungs- und/oder Saatwerkzeugen derartig erfolgt, dass eine Transporthöhe der Arbeitsmaschine 4 Meter beträgt. Wobei hierzu ergänzend auch die Hubhöhe der Bodenbearbeitungs- und/oder Saatwerkzeuge mit angepasst werden kann.

Gemäß einer Weiterbildung der Erfindung kann vorgesehen sein, dass für ein Verändern der Relativposition das zumindest eine Laufrad mit zumindest einer Stelleinrichtung (z.B. gebildet durch einen oder mehrere hydraulisch, pneumatisch und/oder elektrisch betriebene Aktoren (z.B. Zylinder, Linearantrieb und/oder dergl.)) gekoppelt (z.B. wirktechnisch gekoppelt) ist, welche Stelleinrichtung mittels durch eine Steuereinrichtung generierte Stellsignalen steuerbar ist, wobei eine Vorgabe der Stellsignale erfolgt durch, eine manuelle Vorgabe durch eine Bedienperson und/oder durch eine automatisierte Signalerzeugung mittels der Steuereinrichtung. Somit kann ein Verändern der Relativposition bspw. durch eine Bedienperson initiiert werden (z.B. ferngesteuert) und/oder durch eine automatisierte (z.B. durch Hubpositionsabhängige und/oder wirktechnische Koppelung) Signalerzeugung mittels der Steuereinrichtung.

Um unkontrollierte Bewegungen der Stelleinrichtung zu verhindern und somit die Sicherheit der Arbeitsmaschine zu erhöhen ist es denkbar, dass in einer jeweiligen Relativposition der Verfahrweg der Stelleinrichtung sperrbar (z.B. durch eine hydraulische Ventiltechnik) ist und/oder unterbindbar ist (z.B. mittels mechanischen Hubbegrenzungen wie bspw. Einlegeelementen).

Auch kann/können der/die bspw. eine Stelleinrichtung bildende/bildenden Zylinder entsprechend dimensioniert sein oder mit einem entsprechenden Druck beaufschlagt werden, um bspw. unkontrollierte Bewegungen zu verhindern.

Um die Kollisionsgefahr zwischen den Bodenbearbeitungs- und/oder Saatwerkzeugen und dem Fahrgestell noch weiter zu minimieren, ist es optional denkbar, dass das zumindest eine Laufrad und/oder die Stelleinrichtung wirktechnisch mit den Bodenbearbeitungs- und/oder Saatwerkzeugen gekoppelt ist, vorzugsweise derartig wirktechnisch gekoppelt ist, dass ein Verändern der Relativposition des Laufrad ausschließlich bei einer ausgehobenen Hublage der Bodenbearbeitungs-und/oder Saatwerkzeugen möglich ist.

Eine wirktechnische Koppelung kann auf verschiedenste Weise erfolgen. So wäre es bspw. denkbar, dass eine wirktechnische Koppelung erfolgt mittels aufeinandertreffende mechanische Begrenzungselemente, die der Achse und/oder dem zumindest einem Laufrad zum einen und den Bodenbearbeitungs- und/oder Saatwerkzeugen zum anderen zugeordnet sind, so dass sich bspw. die Achse und die Bodenbearbeitungs- und/oder Saatwerkzeuge gegenseitig abstützen. Alternativ oder ergänzend wäre es bspw. möglich, dass eine wirktechnische Koppelung erfolgt mittels einer, der Stelleinrichtung zugeordneten Hubbegrenzungseinrichtung (z.B. mechanische Einlegeclips, Begrenzungsscheiben oder dergl.). Alternativ oder ergänzend wäre es auch denkbar, dass eine wirktechnische Koppelung erfolgt mittels einer hydraulischen und/oder elektrischen Signaleinrichtung, (z.B. hydraulischer Drucksensor, hydraulische Reihenschaltung, Positionssensor, Winkelpotentiometer) die der Stelleinrichtung zum einen und einer Aushubvorrichtung zur Verstellung der Hublage der Bodenbearbeitungs- und/oder Saatwerkzeuge zum anderen zugeordnet ist sowie mit einer Steuereinrichtung signalverbunden und/oder signalverbindbar ist.

Erfindungsgemäß ist es möglich, dass in einer vorderen Relativposition des zumindest einem Laufrad die Aushubvorrichtung beliebige Hublagen der Bodenbearbeitungs- und/oder Saatwerkzeuge einnehmen kann, so dass die jeweiligen Hublagen keine Auswirkung auf die Gewichtsverteilung, insbesondere die Abstützkraft der Zugvorrichtung haben.

Die Aushubvorrichtung kann bspw. einen oder mehrere Aktoren umfassen und/oder einen Koppelrahmen, respektive Schwenkrahmen umfassen. Auch könnte die Aushubvorrichtung eine Zweipunkt- oder Dreipunktverbindung aufweisen oder ausbilden.

Erfindungsgemäß erfolgt ein Verändern der Relativposition zweckmäßig bspw. derartig, dass in einer hinteren Relativposition des zumindest Laufrad eine positive Abstützkraft an der Zugvorrichtung bei der Verbindung mit einer landwirtschaftlichen Zugmaschine anliegt und/oder dass sich ein Schwerpunkt der Arbeitsmaschine in Bezug auf die Fahrtrichtung vor dem zumindest einem Laufrad, vorzugsweise vor einem Aufstandspunkt des zumindest einem Laufrad das in Fahrtrichtung der Zugvorrichtung am nächsten liegend ist, befindet.

Es sei darauf hingewiesen, dass die Bodenbearbeitungs- und/oder Saatwerkzeuge nicht ausschließlich hinter dem zumindest einem Laufrad angeordnet sein müssen, sondern Bodenbearbeitungs- und/oder Saatwerkzeuge auch in Bezug auf die Fahrtrichtung vor und/oder neben dem zumindest einem Laufrad angeordnet sein können. Auch können Bodenbearbeitungs-und/oder Saatwerkzeuge somit auch unterhalb des Maschinenrahmen angeordnet sein.

Insofern die Arbeitsmaschine Saatwerkzeuge umfasst, ist es auch möglich, dass dem Maschinenrahmen ein Vorratsbehälter zum Mitführen und Bereitstellen, des jeweils mittels der Saatwerkzeuge zu verteilenden Verteilgut (z.B. granulares und/oder flüssiges Saatgut, Dünger oder dergl.) zugeordnet ist.

Es sei darauf hingewiesen, dass im Kontext der Erfindung unter die Definition Bodenbearbeitungs-und/oder Saatwerkzeug nicht ausschließlich die jeweiligen, die Bodenbearbeitung und/oder Aussaat ausführenden Komponenten fallen, sondern bspw. auch Rahmenkonstruktionen zum Tragen und Führen der Bodenbearbeitungs- und/oder Saatwerkzeuge.

Die Steuereinrichtung weist bspw. eine Rechnereinheit, einen Bordcomputer und/oder dergl., mit einem Steuerprogramm auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann. Im Kontext der Erfindung umfasst der Begriff der Steuereinrichtung, insbesondere die Gesamtheit der Bauteile zur Signal-und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit der gezogenen landwirtschaftlichen Arbeitsmaschine offenbarte Merkmale auch Verfahrensgemäß offenbart gelten und beanspruchbar sein. Die vorgenannten Aspekte und erfindungsgemäßen Merkmale und Ausführungsvarianten, insbesondere im Hinblick auf die gezogene landwirtschaftliche Arbeitsmaschine gelten somit auch für das Verfahren und sind in beliebiger Weise und Frei miteinander kombinierbar. In umgekehrter Weise gilt das gleiche, so dass auch alle Aspekte, erfindungsgemäße Merkmale und Ausführungsvarianten die im Zusammenhang mit dem Verfahren offenbart sind, demnach auch für die gezogene landwirtschaftliche Arbeitsmaschine offenbart und entsprechend beanspruchbar sind.

Die Erfindung umfasst zur Lösung der Aufgaben zudem ein Verfahren zur Gewichtsverlagerung an einer gezogenen landwirtschaftlichen Arbeitsmaschine, vorzugsweise ausgeführt mit einer gezogenen landwirtschaftlichen Arbeitsmaschine, insbesondere einer Bodenbearbeitungs- und/oder Saatmaschine, wie in diesem Dokument beschrieben, respektive nach einem der Ansprüche 1 bis 15.

Das Verfahren ist zweckmäßig gekennzeichnet durch ein Verändern einer auf eine Zugvorrichtung wirkende Abstützkraft durch ein Einnehmen einer vorderen Relativposition oder einer hinteren Relativposition in Bezug auf die Fahrtrichtung von zumindest einem Laufrad.

Gemäß einer Weiterbildung des Verfahrens ist es möglich, dass ein Einnehmen einer vorderen Relativposition oder einer hinteren Relativposition des zumindest einem Laufrad in Abhängigkeit einer Hublage von Bodenbearbeitungs- und/oder Saatwerkzeugen, vorzugsweise in Abhängigkeit einer abgesenkten und/oder ausgehobenen Hublage von Bodenbearbeitungs- und/oder Saatwerkzeugen, erfolgt.

Somit ist Verfahrensgemäß eine Verlagerung der auf die Laufräder wirkenden Achs- und/oder Radlasten auf die Abstützkraft der Zugvorrichtung und umgekehrt ermöglicht.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Ausführungsvariante einer gezogenen landwirtschaftlichen Arbeitsmaschine mit einem Maschinenrahmen, mehreren Laufrädern und Bodenbearbeitungs- und Saatwerkzeugen, welche Bodenbearbeitungs- und Saatwerkzeuge sich in einer ausgeklappten und abgesenkten Feldarbeitsstellung befinden,
- Figur 2A: eine Seitenansicht einer Arbeitsmaschine gemäß der Figur 1, mit sich in einer zusammengeklappten und ausgehobenen Stellung für eine Straßenfahrt befindenden Bodenbearbeitungs- und Saatwerkzeugen und sich in einer Feldarbeitsstellung (vordere Relativposition) befindenden Laufräder,
- Figur 2B: eine Seitenansicht einer Arbeitsmaschine gemäß der Figur 2A mit sich in einer Stellung für einen Straßentransport (hintere Relativposition) befindenden Laufrädern,
- Figur 2C: eine Prinzipskizze eines Laufrades mit zwei Relativpositionen welche durch ein rotatorisches Verschwenken erreicht werden.

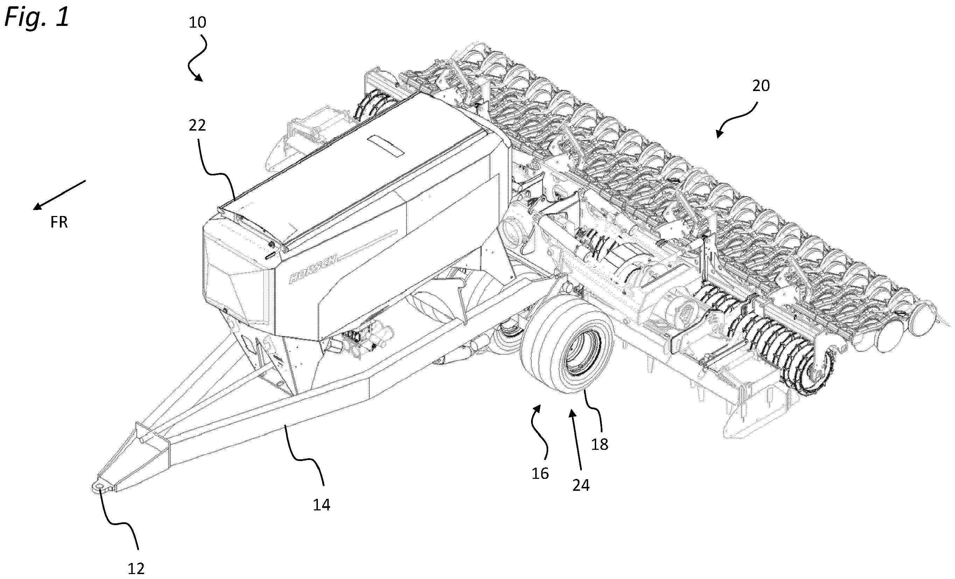

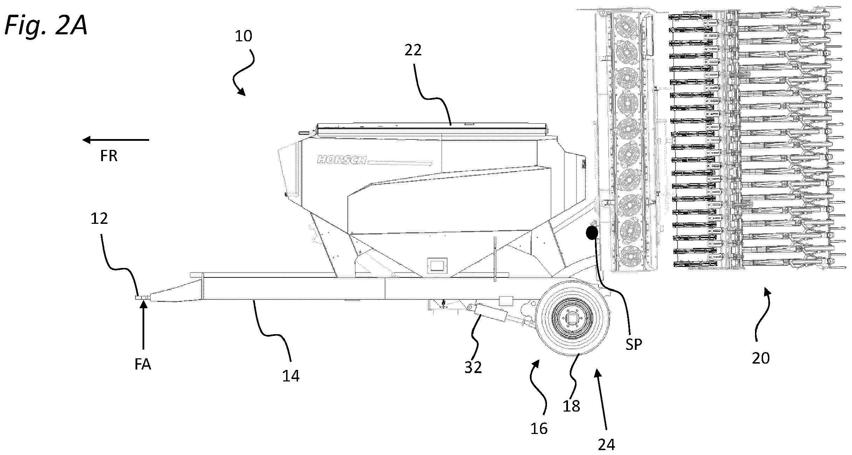

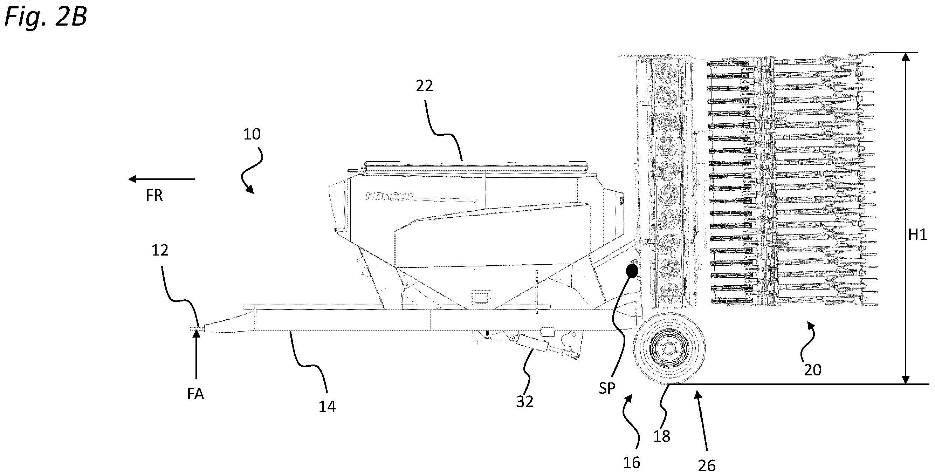

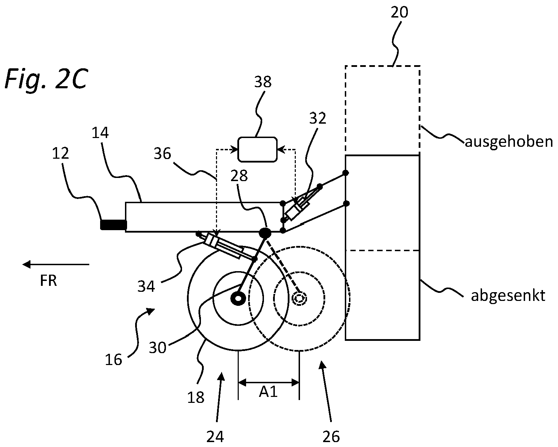

Die in den Figuren 1 und 2 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße gezogene landwirtschaftliche Arbeitsmaschine und das erfindungsgemäße Verfahren ausgestaltet und ausgeführt sein können und stellen keine abschließende Begrenzung dar.

Figur 1 zeigt eine Perspektivansicht einer vereinfacht dargestellten Ausführungsvariante einer gezogenen landwirtschaftlichen Arbeitsmaschine 10. Die Arbeitsmaschine 10 umfasst einen, eine Zugvorrichtung 12 aufweisenden Maschinenrahmen 14, wobei die Zugvorrichtung 12 dazu eingerichtet ist, dass die Arbeitsmaschine 10 mit einer landwirtschaftlichen Zugmaschine (z.B. Traktor hier nicht dargestellt) verbindbar und eine Abstützkraft FA (z.B. positiv oder negativ wirkende Stützlast) auf die landwirtschaftliche Zugmaschine übertragbar ist.

Dem Maschinenrahmen 14 sind, im hinteren Bereich, mehrere sich auf den Boden abstützende Laufräder zugeordnet. Die Arbeitsmaschine 10 umfasst 4 nebeneinander Angeordnete Laufräder 18, wobei in der Figur 1 hiervon nur 3, mitunter nur abschnittweise, sichtbar sind. Die Laufräder 18 bilden zudem eine Achse 16.

Die Arbeitsmaschine 10 ist zur kombinierten Bodenbearbeitung und Aussaat eingerichtet, wobei hierfür am Maschinenrahmen 14, vorzugsweise in Bezug auf die Fahrtrichtung FR hinten den mehreren Laufräder 18, gegenüber diesem höhenverstellbar gelagerte Bodenbearbeitungs- und Saatwerkzeuge 20 angeordnet sind, wobei auch eine ausschließliche Verwendung von Bodenbearbeitungs- oder Saatwerkzeugen 20 denkbar wäre. Die Bodenbearbeitungswerkzeuge sind bspw. durch eine Kreiselegge mit nachlaufender Packerwalze gebildet und die Saatwerkzeuge sind bspw. durch Säschare gebildet. Es sei darauf hingewiesen, dass auch andere Bodenbearbeitungs-und/oder Saatwerkzeuge oder andere Anordnungen von Bodenbearbeitungs- und/oder Saatwerkzeugen denkbar wären.

Zum besseren Verständnis sei darauf hingewiesen, dass im Kontext der Erfindung unter die Definition Bodenbearbeitungs- und/oder Saatwerkzeuge 20 nicht ausschließlich nur die jeweiligen, die Bodenbearbeitung und/oder Aussaat ausführenden Komponenten fallen, sondern auch bspw. Rahmenkonstruktionen zum Tragen und Führen der Bodenbearbeitungs- und/oder Saatwerkzeuge 20. Wobei gemäß der Ausführungsbeispiele die Gesamtheit der Komponenten zur Bodenbearbeitung und/oder Aussaat höhenverstellbar, das heißt in dessen Hublage verstellbar, am Maschinenrahmen 14 gelagert sind. Wobei ein Verändern der Hublage zweckmäßig mittels einer Aushubvorrichtung 32 erfolgt.

Die Aushubvorrichtung 32 gemäß der Figur 2C umfasst zumindest einen Aktor (z.B. hydraulisch, pneumatisch und/oder elektrisch betriebenen Zylinder) und ein Parallelogramm. Wobei die Aushubvorrichtung 32 auch mehrere Aktoren umfassen kann und/oder einen Koppelrahmen (vergl. Figur 2A), respektive Schwenkrahmen umfassen kann. Auch könnte die Aushubvorrichtung 32 eine Zweipunkt- oder Dreipunktverbindung ausbilden. Die Aushubvorrichtung 32, respektive der Aktor kann wiederum mittels einer Steuereinrichtung steuerbar sein.

Auch wenn gemäß der Figuren 1 und 2 die Bodenbearbeitungs- und/oder Saatwerkzeuge 20 ausschließlich hinter den Laufrädern 18 angeordnet sind, wäre alternativ oder ergänzend auch eine Anordnung der Bodenbearbeitungs- und/oder Saatwerkzeuge 20 in Bezug auf die Fahrtrichtung FR vor den Laufräder 18 und/oder neben den Laufräder 18 möglich.

Um die Saatwerkzeuge 20 mit einem jeweiligen Verteilgut versorgen zu können, ist zum Mitführen und Bereitstellen des Verteilgut dem Maschinenrahmen 14 zudem ein Vorratsbehälter 22 zugeordnet.

Die Bodenbearbeitungs- und/oder Saatwerkzeuge 20 gemäß der Figur 1 weisen quer zur Fahrtrichtung FR eine große Erstreckung (z.B. 6 Meter) auf, was wiederum für eine maximal zulässige Transportbreite (z.B. 3 Meter in Deutschland) für eine Straßenfahrt zu breit ist. Um die Arbeitsmaschine 10 dennoch auf der Straße bewegen zu können, sieht die Arbeitsmaschine 10 gemäß der Ausführungsbeispiele vor, dass die Bodenbearbeitungs- und/oder Saatwerkzeuge 20 derartig zusammenklappbar sind, dass eine Transportbreite eingehalten werden kann.

In den Figuren 2A und 2B sind dementsprechend jeweils zusammengeklappte Bodenbearbeitungs-und/oder Saatwerkzeuge 20 dargestellt, wobei die dargestellten Ausführungsbeispiele ansonsten identisch zur Arbeitsmaschine 10 gemäß der Figur 1 sind.

Die Zugvorrichtung 12 ist als Zugöse ausgeführt, könnte jedoch auch ein Zugpendel, eine Zweipunkt-oder Dreipunktverbindung und/oder dergl. sein. Die Zugvorrichtung 12 ist zweckmäßig eingerichtet, dass die Arbeitsmaschine 10 mit einer landwirtschaftlichen Zugmaschine verbindbar und eine Abstützkraft FA auf die Zugmaschine übertragbar ist.

Wie aus den Figuren 1 und 2 hervorgeht sind die Bodenbearbeitungs- und/oder Saatwerkzeuge 20 hinter den Laufrädern 18 angeordnet, was jedoch eine negative Abstützkraft FA an der Zugvorrichtung 12 zur Folge haben kann, das heißt, wodurch mitunter keine Stützlast auf die Zugmaschine übertragen wird. Dies hat zwar für eine Feldarbeit, aufgrund der gleichmäßigen Gewichtsverteilung auf die Bodenbearbeitungs- und/oder Saatwerkzeuge 20 Vorteile, nur ist eine Straßenfahrt somit gesetzlich nicht möglich.

Um nun sowohl bei einer Feldarbeit als auch bei einem Straßentransport eine optimale Gewichtsverteilung zu erreichen ist erfindungsgemäß zweckmäßig eine Gewichtsverlagerung vorgesehen, welche dadurch erreicht wird, dass eine Relativposition 24; 26 von zumindest einem Laufrad 18, gemäß der Ausführungsbeispiele der mehreren Laufräder 18, gegenüber dem Maschinenrahmen 14 (z.B. gegenüber den Bodenbearbeitungs- und/oder Saatwerkzeugen) in Bezug auf die Fahrtrichtung FR veränderbar ist (siehe Figur 2A und 2B und 2C).

Wie aus den Ausführungsbeispielen hervorgeht, erfolgt ein Verändern der Relativposition 24; 26 zweckmäßig derartig, dass zumindest ein Laufrad 18, gegenüber der Fahrtrichtung FR zumindest eine vordere Relativposition 24 (siehe Figur 2A und Figur 2C durchgezogene Linien) und eine hintere Relativposition 26 (sieh Figur 2B und Figur 2C gestrichelte Linien) einnehmen kann. Die vordere Relativposition 24 kann hierbei bspw. für eine Feldarbeit und die hintere Relativposition 26 kann hierbei bspw. für eine Straßenfahrt vorgesehen sein.

Ein Abstand A1, insbesondere bezogen auf einen Aufstandspunkt des Laufrad 18, der vorderen Relativposition 24 zur hinteren Relativposition kann mindestens 0,2 Meter oder mindesten 0,5 Meter oder Mindestens 0,7 Meter oder mindestens 1 Meter betragen. Auch denkbar wäre es, dass ein Abstand A1 der vorderen Relativposition 24 zur hinteren Relativposition 26 mindestens der Größe eines halben Durchmessers des Laufrades 18 entspricht, also bspw. 0,5 Meter bei einem Laufraddurchmesser von 1 Meter.

Wie aus den Ausführungsbeispielen und insbesondere der Figur 2C hervorgeht, ist zweckmäßig insbesondere vorgesehen, dass Vertikal zur Fahrtrichtung FR die Höhenlage des zumindest einen Laufrad 18, vorzugsweise des zumindest einen Laufrad 18 in der vorderen Relativposition 24 und der hinteren Relativposition 26 im Wesentlichen Identisch ist und/oder ein Höhenversatz maximal 0,1 Meter oder maximal 0,25 Meter oder maximal 0,5 Meter beträgt. Somit wird durch eine Veränderung der Relativposition 24; 26 eine Transporthöhe H1 nicht oder nur im geringen Maße beeinflusst.

Wie insbesondere aus der Figur 2C hervorgeht ist es möglich, dass ein Verändern der Relativposition 24; 26 durch ein rotatorischen Verschwenken des Laufrades 18 und/oder einer Achse 16 gegenüber dem Maschinenrahmen 14 um eine quer zur Fahrtrichtung FR orientierte Schwenkachse 28 erfolgt, wobei hierfür das Laufrad 18 und/oder die Achse 16 mittels einer Schwinge 30 am Maschinenrahmen 14 gelagert ist.

Neben einem rotatorischen Verschwenken, wäre auch ein axiales Verschieben des zumindest einen Laufrad 18 und/oder der Achse 16 in Bezug auf die Fahrtrichtung FR gegenüber dem Maschinenrahmen 14 denkbar und/oder ein translatorisches Bewegen des zumindest einen Laufrad 18 und/oder der Achse 16 gegenüber dem Maschinenrahmen 14 denkbar.

Ein Verändern der Relativposition 24, 26 erfolgt vorzugsweise in Abhängigkeit der Hublage der Bodenbearbeitungs- und/oder Saatwerkzeuge 20, das heißt ob die Bodenbearbeitungs- und/oder Saatwerkzeuge 20 abgesenkt oder ausgehoben (Figur 2A und 2B und 2C - gestrichelte Linien) sind. Wobei wiederum eine Hublage mittels einer Aushubvorrichtung 32 veränderbar ist.

Die Arbeitsmaschine 10 ist bspw. derartig ausgeführt, dass eine vordere Relativposition 24 bei einer abgesenkten Hublage der Bodenbearbeitungs- und/oder Saatwerkzeugen 20 eingenommen werden kann (siehe bspw. Figur 1 und 2A) und/oder eine hintere Relativposition 26 ausschließlich bei einer ausgehobenen Hublage der Bodenbearbeitungs- und/oder Saatwerkzeugen 20 eingenommen werden kann (siehe hierzu Figur 2B).

Wie aus der Figur 1 und 2A zu sehen, ist es möglich, dass in einer vorderen Relativposition 24 sich alle Laufräder 18 mit deren komplettem Umfang in Bezug auf die Fahrtrichtung FR vor den Bodenbearbeitungs- und/oder Saatwerkzeugen 20 befinden und/oder in einer hinteren Relativposition 26, sich zumindest ein Laufrad 18 in Bezug auf die Fahrtrichtung FR zumindest abschnittweise auf gleicher Höhe und/oder unterhalb der Bodenbearbeitungs- und/oder Saatwerkzeuge 20 befindet.

Es ist zweckmäßig vorgesehen, dass ein Verändern der Relativposition 24; 26 derartig erfolgt, dass das zumindest eine Laufrad 18, gegenüber der Fahrtrichtung FR zumindest eine vordere Relativposition 24 und eine hintere Relativposition 26 einnehmen kann, wobei in einer hinteren Relativposition 26 eine Anordnung des Laufrad 18 zu den Bodenbearbeitungs- und/oder Saatwerkzeugen 20 derartig erfolgt, dass eine Transporthöhe H1 der Arbeitsmaschine 4 Meter beträgt.

Ein Verändern der Relativposition 24; 26 kann bspw. mittels einer Stelleinrichtung 34 (z.B. gebildet durch einen oder mehrere hydraulisch, pneumatisch und/oder elektrisch betriebene Aktoren (z.B. Zylinder, Linearantrieb und/oder dergl.) erfolgen, welche bspw. mit dem Maschinenrahmen 14 und dem Laufrad 18, respektive der Schwinge 30 gekoppelt ist. Wobei die Stelleinrichtung 34 bspw. ferngesteuert werden kann, z.B. durch eine Bedienperson ferngesteuert werden kann. Wobei der Verfahrweg der Stelleinrichtung 34 auch sperrbar sein kann.

Das Laufrad 18 und/oder die Stelleinrichtung 34 können wirktechnisch mit den Bodenbearbeitungs-und/oder Saatwerkzeugen 20 gekoppelt sein, bspw. derartig wirktechnisch gekoppelt sein, dass ein Verändern der Relativposition 24; 26 des Laufrad 18 ausschließlich bei einer ausgehobenen Hublage der Bodenbearbeitungs- und/oder Saatwerkzeugen 20 möglich ist. Gemäß der Figur 2C erfolgt die wirktechnische Koppelung mittels einer hydraulischen und/oder elektrischen Signaleinrichtung 36 (dargestellt durch gestrichelte Linien mit Pfeilen), die der Stelleinrichtung 34 zum einen und einer Aushubvorrichtung 32 zur Verstellung der Hublage der Bodenbearbeitungs- und/oder Saatwerkzeuge 20 zum anderen zugeordnet ist sowie mit einer Steuereinrichtung 38 signalverbunden und/oder signalverbindbar ist. Wobei die Signaleinrichtung bspw. durch einen Positionssensor, Lagesensor, Drucksensor oder dergl. gebildet sein kann und eingerichtet sein kann eine Hublage der Bodenbearbeitungs- und/oder Saatwerkzeuge mittelbar oder unmittelbar zu erfassen. Auch eine entsprechende Hydraulische Ansteuerung wäre bspw. denkbar.

Auch eine mechanische wirktechnische Koppelung wäre denkbar, bspw. mittels aufeinandertreffende mechanische Begrenzungselemente, die dem Laufrad 18 zum einen und den Bodenbearbeitungs- und/oder Saatwerkzeugen 20 zum anderen zugeordnet sind.

Erfindungsgemäß erfolgt ein Verändern der Relativposition 24; 26 zweckmäßig bspw. derartig, dass in einer hinteren Relativposition 26 des zumindest einen Laufrad 18 eine positive Abstützkraft FA an der Zugvorrichtung 12 bei der Verbindung mit einer landwirtschaftlichen Zugmaschine anliegt und/oder dass sich ein Schwerpunkt SP der Arbeitsmaschine 10 in Bezug auf die Fahrtrichtung FR vor dem zumindest einem Laufrad 18, vorzugsweise vor einem Aufstandspunkt des zumindest einem Laufrad 18 das in Fahrtrichtung FR der Zugvorrichtung 12 am nächsten liegend ist, befindet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 10: Arbeitsmaschine
- 12: Zugvorrichtung
- 14: Maschinenrahmen
- 16: Achse
- 18: Laufrad
- 20: Bodenbearbeitungs- und/oder Saatwerkzeuge
- 22: Vorratsbehälter
- 24: vordere Relativposition
- 26: hintere Relativposition
- 28: Schwenkachse
- 30: Schwinge
- 32: Aushubvorrichtung
- 34: Stelleinrichtung
- 36: Signaleinrichtung
- 38: Steuereinrichtung

- FR: Fahrtrichtung
- FA: Abstützkraft
- A1: Abstand
- SP: Schwerpunkt
- H1: Transporthöhe

## Patentansprüche

1. Gezogene landwirtschaftliche Arbeitsmaschine (10), insbesondere Bodenbearbeitungs-und/oder Saatmaschine,
- mit einem, eine Zugvorrichtung (12) aufweisenden, Maschinenrahmen (14), wobei die Zugvorrichtung (12) dazu eingerichtet ist, dass die Arbeitsmaschine (10) mit einer landwirtschaftlichen Zugmaschine verbindbar und eine Abstützkraft (FA) auf die landwirtschaftliche Zugmaschine übertragbar ist,
- wobei dem Maschinenrahmen (14), vorzugsweise im hinteren Bereich, mehrere sich auf dem Boden abstützende Laufräder (18) zugeordnet sind,
- und wobei am Maschinenrahmen (14), vorzugsweise in Bezug auf die Fahrtrichtung (FR) hinter zumindest einem der mehreren Laufräder (18), gegenüber diesem höhenverstellbar gelagerte Bodenbearbeitungs- und/oder Saatwerkzeuge (20) angeordnet sind, **dadurch gekennzeichnet, dass** eine Relativposition (24; 26) von zumindest einem Laufrad (18) gegenüber dem Maschinenrahmen (14) in Bezug auf die Fahrtrichtung (FR) veränderbar ist.

2. Arbeitsmaschine (10) nach Anspruch 1, **dadurch gekennzeichnet, dass** die Arbeitsmaschine (10) zumindest zwei Laufräder (18) aufweist, welche eine Achse (16) bilden, wobei eine Relativposition (24, 26) der Achse (16) gegenüber dem Maschinenrahmen (14) in Bezug auf die Fahrtrichtung (FR) veränderbar ist.

3. Arbeitsmaschine (10), nach einem der vorherigen Ansprüche, **dadurch gekennzeichnet, dass** ein Verändern der Relativposition (24; 26) derartig erfolgt, dass das zumindest eine Laufrad (18), gegenüber der Fahrtrichtung (FR) zumindest eine vordere Relativposition (24) und eine hintere Relativposition (26) einnehmen kann.

4. Arbeitsmaschine (10), nach Anspruch 3, **dadurch gekennzeichnet, dass** ein Abstand (A1) der vorderen Relativposition (24) zur hinteren Relativposition (26), vorzugsweise bezogen auf einen Aufstandspunkt des zumindest einen Laufrad (18),
- mindestens 0,2 Meter, oder mindestens 0,5 Meter oder mindestens 0,7 Meter oder mindestens 1 Meter beträgt und/oder
- mindestens der Größe eines halben Durchmessers, des zumindest einem Laufrad (18) entspricht.

5. Arbeitsmaschine (10) nach einem der vorherigen Ansprüche, **dadurch gekennzeichnet, dass** Vertikal zur Fahrtrichtung (FR) die Höhenlage des zumindest einen Laufrad (18), vorzugsweise des Aufstandspunkt des zumindest einen Laufrad (18), in der vorderen Relativposition (24) und der hinteren Relativposition (26)
- im Wesentlichen identisch ist und/oder
- ein Höhenversatz maximal 0,1 Meter oder maximal 0,25 Meter oder maximal 0,5 Meter beträgt.

6. Arbeitsmaschine (10) nach einem der vorherigen Ansprüche, **dadurch gekennzeichnet, dass** ein Verändern der Relativposition (24; 26) derartig erfolgt,
- dass das zumindest eine Laufrad (18) gegenüber der Fahrtrichtung (FR) zumindest eine vordere Relativposition (24) und eine hintere Relativposition (26) einnehmen kann,
- wobei ein Verhältnis aus einem Abstand (A1), in Bezug auf die Fahrtrichtung (FR), der vorderen Relativposition (24) zur hinteren Relativposition (26) und einem Höhenversatz vertikal zur Fahrtrichtung (FR) zwischen der vorderen Relativposition (24) und der hinteren Relativposition (26), vorzugsweise jeweils bezogen auf einen Aufstandspunkt des zumindest einen Laufrad (18),
- im wesentlichen maximal 1: 0,2 oder maximal 1: 0,3 oder maximal 1: 0,5 oder maximal 1: 1 beträgt.

7. Arbeitsmaschine (10), nach einem der vorherigen Ansprüche, **dadurch gekennzeichnet, dass** eine Relativposition (24; 26) des zumindest einen Laufrad (18) veränderbar ist durch,
- ein axiales Verschieben gegenüber dem Maschinenrahmen (14) und/oder
- ein rotatorisches Verschwenken gegenüber dem Maschinenrahmen (14), vorzugsweise um eine quer zur Fahrtrichtung (FR) orientierte Schwenkachse (28) und/oder
- ein translatorisches Bewegen des Laufrades (18) gegenüber dem Maschinenrahmen (14).

8. Arbeitsmaschine (10), nach einem der vorherigen Ansprüche, **dadurch gekennzeichnet, dass** ein Verändern der Relativposition (24; 26) des zumindest einen Laufrad (18) in Anhängigkeit einer Hublage der Bodenbearbeitungs- und/oder Saatwerkzeuge (20) erfolgt, vorzugsweise in Abhängigkeit einer abgesenkten und/oder ausgehobenen Hublage der Bodenbearbeitungs- und/oder Saatwerkzeuge (20) erfolgt.

9. Arbeitsmaschine (10), nach Anspruch 8, **dadurch gekennzeichnet, dass** ein Verändern der Relativposition (24; 26) derartig erfolgt, dass das zumindest eine Laufrad (18), gegenüber der Fahrtrichtung (FR) zumindest eine vordere Relativposition (24) und eine hintere Relativposition (26) einnehmen kann, wobei
- eine vordere Relativposition (24) bei abgesenkten Bodenbearbeitungs- und/oder Saatwerkzeugen (20) eingenommen werden kann und/oder
- eine hintere Relativposition (26) ausschließlich bei ausgehobenen Bodenbearbeitungs-und/oder Saatwerkzeugen (20) eingenommen werden kann.

10. Arbeitsmaschine (10), nach einem der vorherigen Ansprüche, **dadurch gekennzeichnet, dass** ein Verändern der Relativposition (24; 26) derartig erfolgt, dass das zumindest eine Laufrad (18), vorzugsweise die mehreren Laufräder (18), gegenüber der Fahrtrichtung (FR) zumindest eine vordere Relativposition (24) und eine hintere Relativposition (26) einnehmen können, wobei
- in einer vorderen Relativposition (24), sich alle Laufräder (18) mit deren komplettem Umfang in Bezug auf die Fahrtrichtung (FR) vor den Bodenbearbeitungs- und/oder Saatwerkzeugen (20) befinden und/oder
- in einer hinteren Relativposition (26), sich zumindest ein Laufrad (18) in Bezug auf die Fahrtrichtung (FR) zumindest abschnittweise auf gleicher Höhe und/oder unterhalb der Bodenbearbeitungs- und/oder Saatwerkzeuge (20) befindet.

11. Arbeitsmaschine (10), nach einem der vorherigen Ansprüche, **dadurch gekennzeichnet, dass** ein Verändern der Relativposition (24; 26) derartig erfolgt, dass das zumindest eine Laufrad (18), gegenüber der Fahrtrichtung (FR) zumindest eine vordere Relativposition (24) und eine hintere Relativposition (26) einnehmen kann, wobei in einer hinteren Relativposition (26) eine Anordnung des Laufrad (18) zu den Bodenbearbeitungs- und/oder Saatwerkzeugen (20) derartig erfolgt, dass eine Transporthöhe (H1) der Arbeitsmaschine 4 Meter beträgt.

12. Arbeitsmaschine (10), nach einem der vorherigen Ansprüche, **dadurch gekennzeichnet, dass** für ein Verändern der Relativposition (24; 26) das zumindest eine Laufrad (18) mit zumindest einer Stelleinrichtung (34) gekoppelt ist, welche Stelleinrichtung (34) mittels durch eine Steuereinrichtung (38) generierte Stellsignale steuerbar ist, wobei eine Vorgabe der Stellsignale erfolgt durch,
- eine manuelle Vorgabe durch eine Bedienperson und/oder
- durch eine automatisierte Signalerzeugung mittels Steuereinrichtung (38).

13. Arbeitsmaschine (10), nach einem der vorherigen Ansprüche, **dadurch gekennzeichnet, dass** das zumindest eine Laufrad (18) und/oder die Stelleinrichtung (34) wirktechnisch mit den Bodenbearbeitungs- und/oder Saatwerkzeugen (20) gekoppelt ist, vorzugsweise derartig wirktechnisch gekoppelt ist, dass ein Verändern der Relativposition (24; 26) des Laufrad (18) ausschließlich bei einer ausgehobenen Hublage der Bodenbearbeitungs- und/oder Saatwerkzeugen (20) möglich ist.

14. Arbeitsmaschine (10), nach Anspruch 13, **dadurch gekennzeichnet, dass** eine wirktechnische Koppelung erfolgt mittels,
- aufeinandertreffende mechanische Begrenzungselemente, die der Achse (16) und/oder dem zumindest einen Laufrad (18) zum einen und den Bodenbearbeitungs- und/oder Saatwerkzeugen (20) zum anderen zugeordnet sind und/oder
- einer, der Stelleinrichtung (34) zugeordneten Hubbegrenzungseinrichtung und/oder
- einer hydraulischen und/oder elektrischen Signaleinrichtung (36), die der Stelleinrichtung (34) zum einen und einer Aushubvorrichtung (32) zur Verstellung der Hublage der Bodenbearbeitungs-und/oder Saatwerkzeuge (20) zum anderen zugeordnet ist sowie mit einer Steuereinrichtung (38) signalverbunden und/oder signalverbindbar ist.

15. Arbeitsmaschine (10), nach einem der vorherigen Ansprüche, **dadurch gekennzeichnet, dass** ein Verändern der Relativposition (24; 26) derartig erfolgt,
- dass in einer hinteren Relativposition (26) des zumindest Laufrad (18) eine positive Abstützkraft (FA) an der Zugvorrichtung (12) bei der Verbindung mit einer landwirtschaftlichen Zugmaschine anliegt und/oder
- dass sich ein Schwerpunkt (SP) der Arbeitsmaschine (10) in Bezug auf die Fahrtrichtung (FR) vor dem zumindest einem Laufrad (18), vorzugsweise vor einem Aufstandspunkt des zumindest einem Laufrad (18) das in Fahrtrichtung (FR) der Zugvorrichtung (12) am nächsten liegend ist, befindet.

16. Verfahren zur Gewichtsverlagerung an einer gezogenen landwirtschaftlichen Arbeitsmaschine (10), vorzugsweise ausgeführt mit einer gezogenen landwirtschaftlichen Arbeitsmaschine (10), insbesondere einer Bodenbearbeitungs- und/oder Saatmaschine, nach einem der vorherigen Ansprüche, **gekennzeichnet durch**,
- ein Verändern einer auf eine Zugvorrichtung (12) wirkenden Abstützkraft (FA) durch ein Einnehmen einer vorderen Relativposition (24) oder einer hinteren Relativposition (26) in Bezug auf die Fahrtrichtung (FR) von zumindest einem Laufrad (18).

17. Verfahren nach Anspruch 16, **dadurch gekennzeichnet, dass** ein Einnehmen einer vorderen Relativposition (24) oder einer hinteren Relativposition (26) des zumindest einem Laufrad (18) in Abhängigkeit einer Hublage von Bodenbearbeitungs- und/oder Saatwerkzeugen (20), vorzugsweise in Abhängigkeit einer abgesenkten und/oder ausgehobenen Hublage von Bodenbearbeitungs- und/oder Saatwerkzeugen (20), erfolgt.
